(19) Europäisches Patentamt
European Patent Office
Office européen des brevets

(11) **EP 4 746 465 A1**

(12) **EUROPEAN PATENT APPLICATION**
published in accordance with Art. 153(4) EPC

(43) Date of publication:
**20.05.2026   Bulletin 2026/21**

(21) Application number: **23944679.2**

(22) Date of filing: **12.07.2023**

(51) International Patent Classification (IPC):
*H04W 8/24* *(2009.01)*

(52) Cooperative Patent Classification (CPC):
**H04W 8/24; H04W 24/08; H04W 72/0446**

(86) International application number:
**PCT/CN2023/107025**

(87) International publication number:
**WO 2025/010659 (16.01.2025 Gazette 2025/03)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Beijing Xiaomi Mobile Software Co.,
Ltd.
Beijing 100085 (CN)**

(72) Inventors:
• HU, Ziquan
  **Beijing 100085 (CN)**
• TAO, Xuhua
  **Beijing 100085 (CN)**

(74) Representative: **Gunzelmann, Rainer
Wuesthoff & Wuesthoff
Patentanwälte und Rechtsanwalt PartG mbB
Schweigerstraße 2
81541 München (DE)**

(54) **COMMUNICATION METHOD, TERMINAL, NETWORK DEVICE, COMMUNICATION SYSTEM,
AND STORAGE MEDIUM**

(57)   The present application relates to a communication method, a terminal, a network device, a communication system, and a storage medium. The method comprises: a terminal sends first information to a network device, wherein the first information is used for indicating a terminal capability of the terminal to perform different measurements simultaneously. In the method provided by the present application, a terminal sends first information to a network device to report the capability of supporting different measurements, so that the network device can know the terminal capability, and the terminal can perform parallel measurement when supporting the corresponding capability, thereby improving the measurement efficiency.

FIG. 2a

## Description

## TECHNICAL FIELD

The present disclosure relates to a field of communication technology, and specifically to a communication method, a terminal, a network device, a communication system, and a storage medium.

## BACKGROUND

A terminal needs to perform mobility measurement on one or more measurement objects (MOs) configured by a network device, and report a measurement result to a network for the network device to determine a current communication status of the terminal and then perform mobility management on the terminal. The network device may configure a measurement gap (MG) for the terminal, so that the terminal may measure an inter-frequency neighboring cell or an inter-system neighboring cell.

## SUMMARY

When a time-domain conflict occurs between measurement gaps (MGs), a terminal may generally only perform a measurement for one of the MGs.

The present disclosure provides a communication method, a terminal, a network device, a communication system, and a storage medium.

According to a first aspect, embodiments of the present disclosure provide a communication method, including: sending, by a terminal, first information to a network device, in which the first information indicates a terminal capability of the terminal for simultaneously performing different measurements.

In the method of the present disclosure, the terminal sends the first information to the network device to report a capability of supporting different measurements, so that the network device may learn the terminal capability, which facilitates the terminal to perform parallel measurements when supporting a corresponding capability, thus improving measurement efficiency.

According to a second aspect, embodiments of the present disclosure provide a communication method, including: receiving, by a network device, first information sent by a terminal, in which the first information indicates a terminal capability of the terminal for simultaneously performing different measurements.

According to a third aspect, embodiments of the present disclosure provide a terminal, including: a transceiver module, configured to send first information to a network device, in which the first information indicates a terminal capability of the terminal for simultaneously performing different measurements.

According to a fourth aspect, embodiments of the present disclosure provide a network device, including: a transceiver module, configured to receive first information sent by a terminal, in which the first information indicates a terminal capability of the terminal for simultaneously performing different measurements.

According to a fifth aspect, embodiments of the present disclosure provide a terminal, including: one or more processors, in which the terminal is configured to implement the method according to the first aspect.

According to a sixth aspect, embodiments of the present disclosure provide a network device, including: one or more processors, in which the network device is configured to implement the method according to the second aspect.

According to a seventh aspect, embodiments of the present disclosure provide a communication system, including a terminal and a network device, in which the terminal is configured to implement the method according to the first aspect, and the network device is configured to implement the method according to the second aspect.

According to an eighth aspect, embodiments of the present disclosure provide a storage medium for storing instructions that, when running on a communication device, cause the communication device to implement the method according to the first aspect or the second aspect.

## BRIEF DESCRIPTION OF THE DRAWINGS

In order to clearly illustrate the technical solution in embodiments of the disclosure, the accompanying drawings to be used in the embodiments of the disclosure are described below. The following drawings are only part embodiments of the present disclosure, and do not constitute a limitation on the protection scope of the present disclosure.

FIG. 1 is an exemplary schematic diagram of an architecture of a communication system according to an embodiment of the present disclosure.
FIG. 2a is an exemplary schematic diagram of an interaction of a method according to an embodiment of the present disclosure.
FIG. 2b is a schematic diagram of a conflict between a network controlled small gap (NCSG) and another measurement gap (MG) according to an embodiment of the present disclosure.
FIG. 3a is an exemplary flowchart of a method according to an embodiment of the present disclosure.
FIG. 3b is an exemplary flowchart of a method according to an embodiment of the present disclosure.
FIG. 3c is an exemplary flowchart of a method according to an embodiment of the present disclosure.
FIG. 3d is an exemplary flowchart of a method according to an embodiment of the present disclosure.
FIG. 4a is an exemplary flowchart of a method according to an embodiment of the present disclosure.
FIG. 4b is an exemplary flowchart of a method according to an embodiment of the present disclosure.

FIG. 5a is a schematic diagram of a structure of a terminal according to an embodiment of the present disclosure.

FIG. 5b is a schematic diagram of a structure of a network device according to an embodiment of the present disclosure.

FIG. 6a is a block diagram of a communication device according to an embodiment of the present disclosure.

FIG. 6b is a block diagram of a communication device according to an embodiment of the present disclosure.

## DETAILED DESCRIPTION

The present disclosure provides a communication method, a terminal, a network device, a communication system, and a storage medium.

According to a first aspect, embodiments of the present disclosure provide a communication method, including: sending, by a terminal, first information to a network device, in which the first information indicates a terminal capability of the terminal for simultaneously performing different measurements.

In the above embodiments, the terminal sends the first information to the network device to report a capability of supporting different measurements, so that the network device may learn the terminal capability, which facilitates the terminal to perform parallel measurements when supporting a corresponding capability, thus improving measurement efficiency.

In some embodiments in combination with the first aspect, in some embodiments, the terminal capability includes at least one of: a first capability for performing parallel measurements simultaneously according to a network controlled small gap (NCSG) and a concurrent measurement gap (MG); a second capability for performing parallel measurements simultaneously according to a measurement occasion for which a needforgap (NFG) is that no MG is needed and a concurrent MG; a third capability for supporting a plurality of sets of NCSG configurations and not supporting performing parallel measurements according to an NCSG; or a fourth capability for supporting a plurality of sets of NCSG configurations, and performing parallel measurements according to an NCSG.

In the above embodiments, different measurement capabilities of the terminal on different links according to different MGs are defined, so that corresponding measurements may be performed according to different measurement capabilities of the terminal.

In some embodiments in combination with the first aspect, in some embodiments, the method further includes: in a case that the terminal supports the third capability, determining, by the terminal, a scaling factor $K_p$ of a layer 3 (L3) measurement according to a time-domain conflict between a plurality of sets of NCSGs and a measurement occasion for which no MG is needed.

In the above embodiments, when the terminal supports the third capability, the terminal may determine a relevant parameter of an L3 measurement on the basis of considering the NCSG, so that an effective measurement may be performed when the measurement occasion for which no MG is needed conflicts with a measurement length (ML) of the NCSG.

In some embodiments in combination with the first aspect, in some embodiments, $K_p$ satisfies: $K_p = N_{total} / N_{available}$, in which $N_{total}$ represents a total number of synchronization signal/physical broadcast channel block (SSB) measurement timing configuration (SMTC) occasions within a first window, and $N_{available}$ represents a number of SMTC occasions within the first window that do not overlap with any non-dropped measurement occasion or an ML of the NCSG.

In the above embodiments, an SMTC occasion of an L3 measurement for which no MG is needed is determined by considering an overlap between the NCSG and the SMTC occasion.

In some embodiments in combination with the first aspect, in some embodiments, $N_{total}$ includes SMTC occasions within the first window that overlap with a measurement occasion or SMTC occasions within the first window that overlap with the ML of the NCSG.

In the above embodiments, among the number of SMTC occasions within the first window, the SMTC occasions that overlap with the ML of the NCSG are considered, which is beneficial for a measurement in an NCSG scenario.

In some embodiments in combination with the first aspect, in some embodiments, the first window is a maximum value between a period of the SMTC occasions and a maximum measurement gap repetition period (MGRP_max), and the MGRP_max is a maximum value among MGRPs of configured first part MGs and visible interruption repetition periods (VIRPs) of configured first part NCSGs, in which MGs and NCSGs are per-user equipment (UE) configurations, the first part MGs include all configured MGs, and the first part NCSGs include all configured NCSGs; or MGs and NCSGs are per-frequency range (FR) configurations, the first part MGs include an MG corresponding to an FR that is the same as a frequency of a reference signal, such as an SSB frequency, and the first part NCSGs include an NCSG corresponding to the FR that is the same as the SSB frequency, in which a starting time of the first window is a starting time of any SMTC occasion.

In the above embodiments, an interval of the first window in an NCSG scenario is defined, which is beneficial for measurement in the NCSG scenario.

In some embodiments in combination with the first aspect, in some embodiments, $K_p$ is 1 in a case that $N_{available}$ is 0.

In the above embodiments, $K_p$ being equal to 1 indicates that an NCSG pattern configured by the network device does not conflict with the SMTC. In this scenario, measurements on two links performed by the terminal do not affect each other, thus reducing a measurement delay.

In some embodiments in combination with the first aspect, in some embodiments, in a case that the terminal supports the first capability, the second capability or the fourth capability, a carrier-specific scaling factor (CSSF) of an L3 measurement is applicable to a first measurement object (MO) associated with the NCSG.

In the above embodiments, when the terminal supports the first capability, the second capability, or the fourth capability, the terminal may perform the L3 measurement of the first MO according to the CSSF to scale a period corresponding to the MG, which is beneficial for solving a measurement when different MGs conflict.

In some embodiments in combination with the first aspect, in some embodiments, the first MO includes at least one of: an SSB-based intra-frequency MO requiring the NCSG to perform measurement; or an inter-system MO requiring the NCSG to complete measurement.

In the above embodiments, several types of the first MO are defined, and a period of the MG may be scaled according to the CSSF when measuring this part of MOs.

In some embodiments in combination with the first aspect, in some embodiments, in a case that the terminal supports the third capability, a CSSF of an L3 measurement is applicable to a second MO associated with the NCSG.

In the above embodiments, when the terminal supports the third capability, the terminal may perform the L3 measurement of the second MO according to the CSSF to scale a period corresponding to the MG, which is beneficial for solving a measurement when different MGs conflict.

In some embodiments in combination with the first aspect, in some embodiments, the second MO includes at least one of: an SSB-based intra-frequency MO requiring no MG, in which all SMTC occasions of the SSB-based intra-frequency MO overlap with the NCSG; an SSB-based intra-frequency MO requiring the NCSG; an SSB-based intra-frequency MO, in which all or some of SMTC occasions of the SSB-based intra-frequency MO overlap with the NCSG; an SSB-based inter-frequency MO requiring no MG, in which all SMTC occasions of the SSB-based inter-frequency MO overlap with the NCSG; an SSB-based inter-frequency MO requiring the NCSG; or an inter-system MO requiring the NCSG.

In the above embodiments, several types of the second MO are defined, and a period of the MG may be scaled according to the CSSF when measuring this part of MOs.

In some embodiments in combination with the first aspect, in some embodiments, the terminal measures the second MO according to the NCSG.

In the above embodiments, the terminal is expected to measure the second MO according to the NCSG, so that an effective measurement may be performed according to different NCSGs when supporting the third capability.

In some embodiments in combination with the first aspect, in some embodiments, each set of NCSGs in a plurality of sets of NCSGs has a corresponding CSSF.

In the above embodiments, each NCSG has a corresponding CSSF, so that a corresponding NCSG may be scaled according to different CSSFs.

In some embodiments in combination with the first aspect, in some embodiments, the method further includes: in a case that the terminal supports the third capability, determining, by the terminal, a parameter P of layer 1 (L1) measurement according to a time-domain conflict between a plurality of sets of NCSGs and a measurement occasion for which no MG is needed.

In the above embodiments, when the terminal supports the third capability, the terminal may adaptively determine the relevant parameter of the L1 measurement to achieve an effective measurement in an NCSG scenario.

In some embodiments in combination with the first aspect, in some embodiments, the P satisfies: in a frequency range 1 (FR1), $P = N_{total}' / N_{outside\_MG}$; or in an FR2 and $N_{available}' = 0$, $P = \text{sharing factor} * N_{total}' / N_{outside\_MG}$, or in the FR2 and $N_{available}' > 0$, $P = N_{total}' / N_{available}'$, in which $N_{total}'$ represents a total number of reference signal resource occasions within a second window; $N_{outside\_MG}$ represents a number of reference signal resource occasions within the second window that do not overlap with an MG or a number of reference signal resource occasions within the second window that do not overlap with an ML of the NCSG; $N_{available}'$ represents a number of reference signal resource occasions within the second window that do not overlap with any of the MG, an SMTC occasion, or the ML of the NCSG; and the sharing factor represents a constant determined according to a protocol.

In the above embodiments, a parameter related to a reference signal resource to be measured may be determined by using a corresponding manner according to an FR, so that a reference signal resource occasion on which measurement may be performed may be determined.

In some embodiments in combination with the first aspect, in some embodiments, $N_{total}'$ includes one of: a reference signal resource occasion within the second window that overlaps with an MG, a reference signal resource occasion that overlaps with the SMTC occasion, or a reference signal resource occasion that overlaps with the ML of the NCSG.

In the above embodiments, among the number of reference signal resource occasions within the second window, the reference signal resource occasion that overlaps with the ML of the NCSG is considered, which is beneficial for a measurement in an NCSG scenario.

In some embodiments in combination with the first aspect, the second window is a maximum value between a period of a reference signal and a maximum measurement gap repetition period (MGRP_max), in which the MGRP_max is a maximum value among MGRPs of configured first part MGs and VIRPs of configured first part NCSGs, in which MGs and NCSGs are per-UE configurations, the first part MGs include all configured MGs, and the first part NCSGs include all configured NCSGs; or MGs and NCSGs are per-FR configurations, the first part MGs include an MG corresponding to an FR that is the same as a reference signal frequency, and the first part NCSGs include an NCSG corresponding to the FR that is the same as the reference signal frequency, in which a starting time of the second window is a starting time of any reference signal resource occasion.

In the above embodiments, a second window interval in an NCSG scenario is defined, which is beneficial for a measurement in the NCSG scenario.

According to a second aspect, the present disclosure provides a communication method, including: receiving, by a network device, first information sent by a terminal, in which the first information indicates a terminal capability of the terminal for simultaneously performing different measurements.

In the above embodiments, the network device receives the first information sent by the terminal to learn a measurement capability supported by the terminal, which facilitates the terminal to perform parallel measurements when supporting a corresponding capability, thus improving measurement efficiency.

In some embodiments in combination with the second aspect, in some embodiments, the terminal capability includes at least one of: a first capability for performing parallel measurements simultaneously according to an NCSG and a concurrent MG; a second capability for performing parallel measurements simultaneously according to a measurement occasion for which an NFG is that no MG is needed and a concurrent MG; a third capability for supporting a plurality of sets of NCSG configurations and not supporting performing parallel measurements according to an NCSG; or a fourth capability for supporting a plurality of sets of NCSG configurations, and performing parallel measurements according to an NCSG.

In some embodiments in combination with the second aspect, in some embodiments, a scaling factor $K_p$ of an L3 measurement satisfies: $K_p = N_{total} / N_{available}$, in which $N_{total}$ represents a total number of SMTC occasions within a first window, and $N_{available}$ represents a number of SMTC occasions within the first window that do not overlap with any non-dropped measurement occasion or an ML of the NCSG, in which the terminal supports the third capability.

In some embodiments in combination with the second aspect, in some embodiments, $N_{total}$ includes SMTC occasions within the first window that overlap with a measurement occasion or SMTC occasions within the first window that overlap with the ML of the NCSG.

In some embodiments in combination with the second aspect, in some embodiments, the first window is a maximum value between a period of the SMTC occasions and a maximum measurement gap repetition period (MGRP_max), and the MGRP_max is a maximum value among MGRPs of configured first part MGs and VIRPs of configured first part NCSGs, in which MGs and NCSGs are per-UE configurations, the first part MGs include all configured MGs, and the first part NCSGs include all configured NCSGs; or MGs and NCSGs are per-FR configurations, the first part MGs include an MG corresponding to an FR that is the same as an SSB frequency, and the first part NCSGs include an NCSG corresponding to the FR that is the same as the SSB frequency, in which a starting time of the first window is a starting time of any SMTC occasion.

In some embodiments in combination with the second aspect, in some embodiments, $K_p$ is 1 in a case that $N_{available}$ is 0.

In some embodiments in combination with the second aspect, in some embodiments, in a case that the terminal supports the first capability, the second capability or the fourth capability, a CSSF of an L3 measurement is applicable to a first MO associated with the NCSG.

In some embodiments in combination with the second aspect, the first MO includes at least one of: an SSB-based intra-frequency MO requiring the NCSG to perform measurement; or an inter-system MO requiring the NCSG to complete measurement.

In some embodiments in combination with the second aspect, in some embodiments, in a case that the terminal supports the third capability, a CSSF of an L3 measurement is applicable to a second MO associated with the NCSG.

In some embodiments in combination with the second aspect, the second MO includes at least one of: an SSB-based intra-frequency MO requiring no MG, in which all SMTC occasions of the SSB-based intra-frequency MO overlap with the NCSG; an SSB-based intra-frequency MO requiring the NCSG; an SSB-based intra-frequency MO, in which all or some of SMTC occasions of the SSB-based intra-frequency MO overlap with the NCSG; an SSB-based inter-frequency MO requiring no MG, in which all SMTC occasions of the SSB-based inter-frequency MO overlap with the NCSG; an SSB-based inter-frequency MO requiring the NCSG; or an inter-system MO requiring the NCSG.

In some embodiments in combination with the second aspect, in some embodiments, each set of NCSGs in a plurality of sets of NCSGs has a corresponding CSSF.

In some embodiments in combination with the second aspect, a parameter P of L1 measurement satisfies: in an FR1, $P = N_{total}' / N_{outside\_MG}$; or in an FR2 and $N_{available}' = 0$, $P = $ sharing factor $* N_{total}' / N_{outside\_MG}$, or in the FR2 and $N_{available}' > 0$, $P = N_{total}' / N_{available}'$, in which $N_{total}'$ represents a total number of reference signal resource occasions within a second window; $N_{outside\_MG}$ represents a number of reference signal resource occasions within the second window that do not overlap with an MG or a number of reference signal resource occasions within the second window that do not overlap with an ML of the NCSG; $N_{available}'$ represents a number of reference signal resource occasions within the second window that do not overlap with any of the MG, an SMTC occasion, or the ML of the NCSG; and the sharing factor represents a constant determined according to a protocol, in which the terminal supports the third capability.

In some embodiments in combination with the second aspect, in some embodiments, $N_{total}'$ includes one of: a reference signal resource occasion within the second window that overlaps with an MG, a reference signal resource occasion that overlaps with the SMTC occasion, or a reference signal resource occasion that overlaps with the ML of the NCSG.

In some embodiments in combination with the second aspect, in some embodiments, the second window is a maximum value between a period of a reference signal and a maximum measurement gap repetition period (MGRP_max), in which the MGRP_max is a maximum value among MGRPs of configured first part MGs and VIRPs of configured first part NCSGs, in which MGs and NCSGs are per-UE configurations, the first part MGs include all configured MGs, and the first part NCSGs include all configured NCSGs; or MGs and NCSGs are per-FR configurations, the first part MGs include an MG corresponding to an FR that is the same as a reference signal frequency, and the first part NCSGs include an NCSG corresponding to the FR that is the same as the reference signal frequency, in which a starting time of the second window is a starting time of any reference signal resource occasion.

According to a third aspect, the present disclosure provides a terminal, including: a transceiver module, configured to send first information to a network device, in which the first information indicates a terminal capability of the terminal for simultaneously performing different measurements.

According to a fourth aspect, the present disclosure provides a network device, including: a transceiver module, configured to receive first information sent by a terminal, in which the first information indicates a terminal capability of the terminal for simultaneously performing different measurements.

According to a fifth aspect, the present disclosure provides a terminal, including: one or more processors, in which the terminal is configured to implement the method according to the first aspect.

According to a sixth aspect, the present disclosure provides a network device, including: one or more processors, in which the network device is configured to implement the method according to the second aspect.

According to a seventh aspect, the present disclosure provides a communication system, including a terminal and a network device, in which the terminal is configured to implement the method according to the first aspect, and the network device is configured to implement the method according to the second aspect.

According to an eighth aspect, the present disclosure provides a storage medium for storing instructions that, when running on a communication device, cause the communication device to implement the method according to the first aspect or the second aspect.

According to a ninth aspect, embodiments of the present disclosure provide a program product that, when executed by a communication device, causes the communication device to implement the method described in optional implementations of the first aspect or the second aspect.

According to a tenth aspect, embodiments of the present disclosure provide a computer program that, when running on a computer, causes the computer to implement the method described in optional implementations of the first aspect or the second aspect.

According to an eleventh aspect, embodiments of the present disclosure provide a chip or a chip system. The chip or the chip system includes a processing circuit, configured to implement the method described in optional implementations of the first aspect or the second aspect.

It may be understood that the terminal, the network device, the communication system, the storage medium, the program product, the computer program, the chip, or the chip system is all used for implementing the method provided in the embodiments of the present disclosure. Therefore, beneficial effects that may be achieved may be referred to beneficial effects in the corresponding method and are not repeated here.

Embodiments of the present disclosure are not exhaustive and only serve as illustrations of some embodiments, but not as specific limitations to the protection scope of the present disclosure. When there is no contradiction, each step in an embodiment may be implemented as an independent embodiment, and steps may be arbitrarily combined. For example, a solution obtained by removing some steps from an embodiment may also be implemented as an independent embodiment. A sequence of steps in an embodiment may be arbitrarily exchanged. In addition, optional implementations in an embodiment may be arbitrarily combined. Furthermore, different embodiments may be arbitrarily combined. For example, some or all steps of different embodiments may be arbitrarily combined, and an embodiment may be arbitrarily combined with optional implementations of other embodiments.

In various embodiments of the present disclosure, unless otherwise specified and in case of logical inconsistency, terms and/or descriptions are consistent in all embodiments and reference may be made to each other. Technical features from different embodiments may be combined to form a new embodiment based on their inherent logical relationships.

The terms used in embodiments of the present disclosure are for a purpose of describing specific embodiments only and are not intended to limit the present disclosure.

In embodiments of the present disclosure, unless otherwise specified, elements expressed in a singular form, such as "a", "an", "the", "said", "above", "aforementioned", "this" etc. may mean "one and only one" or may mean "one or more", "at least one", etc. For example, when articles such as "a", "an", or "the" are used in translation, the noun following the article may be understood in the singular form or in the plural form.

In embodiments of the present disclosure, "a plurality of" means two or more.

In some embodiments, terms such as "at least one of", "one or more", "a plurality of", "multiple", etc. may be used interchangeably.

In some embodiments, expressions such as "at least one of A or B", "A and/or B", "in a case A, in another case B", and "in response to a case A, in response to another case B" in the present disclosure, depending on situations, may include at least one of following solutions: performing A in some implementations (performing A independently of B); performing B in some implementations (performing B independently of A); selecting one of A or B for execution in some implementations (selectively performing A or B); and performing A and B in some implementations (performing both A and B). The similar principle applies when there are more parts such as A, B, C, etc.

In some embodiments, expressions such as "A or B", depending on situations, may include following technical solutions: performing A in some implementations (performing A independently of B); performing B in some implementations (performing B independently of A); and selecting one of A or B for execution in some implementations (selectively performing A or B). The similar principle applies when there are more parts such as A, B, C, etc.

The prefix terms such as "first" and "second" in embodiments of the present disclosure are used solely to distinguish different described objects and do not limit a position, a sequence, a priority, quantity, or content of the described objects. For a statement regarding the described object, reference may be made to claims or descriptions in the context of the embodiments and should not constitute other restrictions due to the use of the above prefix terms. For example, if the described object is "field", ordinal numbers before the "field" in "first field" and "second field" do not limit a position or a sequence between fields. "First" and "second" do not limit whether modified "fields" are in a same message, nor do they limit an order of the "first field" and the "second field." For another example, if the described object is "level", ordinal numbers before the "level" in "first level" and "second level" do not limit a priority between levels. Furthermore, a quantity of described objects is not limited by the ordinal numbers, which may be one or more. Taking "first apparatus" as an example, there may be one or more "apparatus". In addition, objects modified by different words may be the same or different. For example, if the described object is an "apparatus", "first apparatus" and "second apparatus" may be a same apparatus or different apparatuses, and their types may be the same or different. Similarly, if the described object is "information", "first information" and "second information" may be same information or different information, and their content may be the same or different.

In some embodiments, "including A", "containing A", "configured to indicate A", or "carrying A" may be interpreted as directly carrying A or indirectly indicating A.

In some embodiments, terms such as "in response to...", "in response to determining...", "in a case that...", "when...", "while...", "in the event of...", "if..." etc. may be used interchangeably.

In some embodiments, the terms such as "greater than", "greater than or equal to", "not less than", "more than", "more than or equal to", "no less than", "higher than", "higher than or equal to", "not lower than", "above", etc. may be used interchangeably. The terms such as "less than", "less than or equal to", "not greater than", "fewer than", "fewer than or equal to", "no more than", "lower than", "lower than or equal to", "not higher than", "below" etc. may also be used interchangeably.

In some embodiments, "device" and "apparatus" may be interpreted as either physical or virtual. Names are not limited to those recorded in the embodiments. In some cases, they may be interpreted as "equipment", "device", "circuit", "network element", "node", "function", "unit", "section", "system", "network", "chip", "chip system", "entity", "subject", etc.

In some embodiments, "network" may be interpreted as a device included in a network, for example, an access network device, a core network device, etc.

In some embodiments, "access network device (AN device)" may also be called "radio access network device (RAN device)", "base station (BS)", "radio base station", "fixed station", and in some embodiments may also be understood as "node", "access point", "transmission point (TP)", "reception point (RP)", "transmission/-reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)", etc.

In some embodiments, "terminal" or "terminal device" may be called "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", etc.

In some embodiments, obtaining data, information, etc. complies with laws and regulations of a country where it is located.

In some embodiments, data, information, etc. may be obtained after agreed by a user.

In addition, each element, each row, or each column in tables of embodiments of the present disclosure may be implemented as an independent embodiment. Any combination of elements, rows, or columns may also be implemented as an independent embodiment.

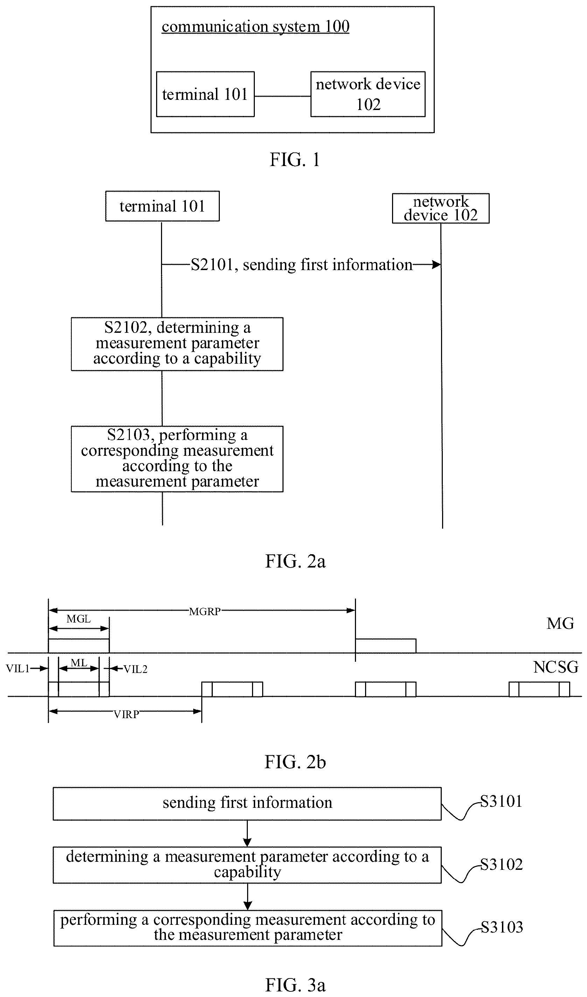

FIG. 1 is a schematic diagram of an architecture of a communication system according to an embodiment of the present disclosure.

As shown in FIG. 1, a communication system 100 may include a terminal 101 and a network device 102.

In some embodiments, the terminal 101 includes, for example, at least one of a mobile phone, a wearable device, an Internet of Things device, or a car with a communication function, a smart car, a Pad, a computer with a wireless transceiving function, a virtual reality (VR) terminal, an augmented reality (AR) terminal, a wireless terminal in industrial control, a wireless terminal in self-driving, a wireless terminal in a remote medical surgery, a wireless terminal in a smart grid, a wireless terminal in a transportation safety, a wireless terminal in a smart city, or a wireless terminal in a smart home, etc., which is not limited herein.

In some embodiments, the network device 102 may include at least one of an access network device or a core network device.

In some embodiments, the access network device 102 is, for example, a node or device that connects the terminal to a wireless network. The access network device may include at least one of an evolved NodeB (eNB) in a 5G communication system, a next generation eNB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a baseband unit (BBU), a mobile switching center, a base station in a 6G communication system, an Open RAN, a Cloud RAN, a base station in another communication system, an access node in a wireless fidelity (Wi-Fi) system, which is not limited herein.

In some embodiments, the technical solution of the present disclosure may be applied to an architecture of the Open RAN. In this case, an interface between access network devices or within the access network device in embodiments of the present disclosure may become an internal interface of the Open RAN. Processes and information interaction may be implemented via software or programs.

In some embodiments, the access network device may be composed of a central unit (CU) and distributed units (DUs). The CU may also be referred to as a control unit. The use of CU-DU structure allows to divide a protocol layer of the access network device, such that some of the protocol layer functions are placed in the CU for centralized control, and some or all of the remaining protocol layer functions are distributed in the DUs, and the DUs are centrally controlled by the CU, which is not limited herein.

In some embodiments, the core network device may be a device including one or more network elements, or may be a plurality of devices or device groups, each of which includes all or part of the above one or more network elements. The network elements may be virtual or physical. The core network includes, for example, at least one of an evolved packet core (EPC), a 5G core network (5GCN), or a next generation core (NGC).

It may be understood that the communication system in embodiments of the present disclosure is to clearly illustrate the technical solution of embodiments of the present disclosure, and does not constitute a limitation on the technical solution in embodiments of the present disclosure. Those skilled in the art may know, with evolution of the system architecture and emergence of new service scenarios, the technical solution in embodiments of the disclosure is also applicable to similar technical problems.

The following embodiments of the present disclosure may be applied to the communication system 100 shown in FIG. 1, or to some entities, which are not limited herein.

Entities in FIG. 1 are illustrative. The communication system may include all or some of the entities in FIG. 1, or may include other entities not shown in FIG. 1. The entities may be in any number and in any form. Connection relationships between the entities are illustrative. The entities may be unconnected or may be connected. They may be connected in any manner, for example, they may be directly connected or indirectly connected, or may be connected via a wired or wireless way.

Embodiments of the present disclosure may be applied to long term evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), future radio access (FRA), new-radio access technology (RAT), new radio (NR), new radio access (NX), future generation radio access (FX), global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, ultra-wideband (UWB), Bluetooth (registered trademark), public land mobile network (PLMN), device-to-device (D2D) system, machine to machine (M2M) system, Internet of Things (IoT) system, Vehicle-to-Everything (V2X), systems using other communication methods, next-generation systems extended based on them, etc. In addition, a combination of a plurality of systems (e.g., LTE or a combination of LTE-A and 5G) may be applied.

In embodiments of the present disclosure, a basic assumption for a legacy MG is that a terminal performs measurements on a serving cell and a neighboring cell on a same RF chain.

In embodiments of the present disclosure, an MO configured by the network device 102 corresponds to a signal from a neighboring cell to be measured or a signal of another carrier. Due to manufacturing cost and shape impact, the terminal 101 operates at a same frequency point at a time point, and the terminal 101 may generally measure an MO centered on the frequency point at the time point. For example, the terminal 101 may easily measure a neighboring cell signal with a same frequency as a current operating frequency point, and meanwhile receives and sends data within the serving cell. When the terminal 101 performs a neighboring cell measurement on different frequencies, such as an inter-frequency neighboring cell, or on other systems, such as other wireless networks like 5G NR, the terminal 101 needs to suspend communication with the serving cell, including suspending data reception (RX) or transmission (TX) with the serving cell, and needs to adjust an RF module to configure a frequency to perform a measurement on this part of neighboring cells, and then restore a connection with the serving cell after a period of time. An MG is a time interval during which the terminal 101 suspends communication with the serving cell to measure an inter-frequency neighboring cell or other wireless neighboring cells.

**In** embodiments of the present disclosure, the network device 102 may configure a plurality of MOs for the terminal 101, among which there may be a plurality of MOs that require a measurement based on the MG, and there may be a plurality of MOs competing for a same set of MGs. In this case, the terminal 101 may determine a scaling factor of each MO to determine a corresponding measurement requirement.

In embodiments of the present disclosure, there are two types of MGs configured by the network device such as a first network device 102.

One is a per-UE MG. The UE performs all measurements requiring an MG based on the per-UE MG.

The other one is a per-FR MG, which is divided into a per-FR1 MG and a per-FR2 MG. If a target frequency point and a serving cell frequency point are in a same FR, the terminal 101 performs a MG-based measurement based on this FR MG configuration. The network device 102 may configure the per-FR1 MG and/or the per-FR2 MG based on capability information (independentGapConfig) reported by the terminal 101. Systems based on FR1 include evolved universal terrestrial radio access (E-UTRA), universal terrestrial radio access frequency division duplex (UTRA-FDD), and NR; and systems based on FR2 include the NR. It may be understood that this capability information indicates a capability of the terminal 101 supporting independent RF chains to perform independent measurements for FR1 and FR2, respectively.

In embodiments of the present disclosure, the MG may be an NCSG. A terminal supporting the NCSG generally has a separate idle RF chain, which is only used for a measurement of a neighboring cell (such as an intra-frequency neighboring cell, an inter-frequency neighboring cell, an inter-system neighboring cell), that is, the terminal 101 performs the measurement of the neighboring cell based on the NCSG on the separate idle RF chain.

When different RF chains share part of RF devices and baseband processing modules and when different MGs conflict, the terminal may only perform a measurement according to one of the MGs, which affects measurement efficiency.

FIG. 2a is a schematic diagram of an interaction of a communication method according to an embodiment of the present disclosure. As shown in FIG. 2a, embodiments of the present disclosure relate to a communication method, and the above method includes following steps S2101 to S2103.

At S2101, the terminal 101 sends first information to the network device 102.

In some embodiments, the first information indicates a terminal capability of the terminal for simultaneously performing different measurements, for example, indicates a terminal capability of the terminal for simultaneously performing measurements on different RF chains.

In an example, the terminal 101 includes a main RF chain and an idle RF chain. There may be one or more idle RF chains.

In some embodiments, the first information may be capability information or indication information.

In some embodiments, the terminal 101 may send the first information via a radio resource control (RRC) message.

In some embodiments, referring to FIG. 2b, measurement performed by the terminal on different RF chains may be: a scenario of parallel measurements performed according to the NCSG and the concurrent MG, in which the concurrent MG includes another MG except the NCSG.

Optionally, the another MG may be one of a concurrent MG, a pre-configured measurement gap (pre-MG), a measurement occasion under an NFG, or a legacy MG.

Optionally, in an NCSG pattern, an ML is used for measurement, and a visible interruption 1 (VIL1) and a VIL2 are used for adjusting an RF point. In the NCSG, interruption to a communication with the serving cell occurs at the VIL1 and the VIL2, which has little impact on communication throughput.

In some embodiments, measurements performed by the terminal on different RF chains may be: parallel measurements of a measurement occasion under an NFG and another MG performed by a terminal that supports an NFG capability. For example, there is no need for a measurement occasion whose MG is with interruption (no-gap-with-interruption), in which case the terminal 101 also satisfies having an independent idle RF chain.

In some embodiments, measurements performed by the terminal on different RF chains may be: the terminal supporting parallel measurements performed on a plurality of idle RF chains according to corresponding NCSGs based on a plurality of sets of NCSGs.

In some embodiments, the terminal capability includes at least one of: a first capability for performing parallel measurements simultaneously according to an NCSG and a concurrent MG, for example, the first capability may be a capability for performing the parallel measurements simultaneously according to the NCSG and the concurrent MG on different RF chains; a second capability for performing parallel measurements simultaneously according to a measurement occasion for which an NFG is that no MG is needed and a concurrent MG, for example, a second capability is a capability for performing the parallel measurements simultaneously on different RF chains according to a measurement occasion for which the NFG is that no MG is needed but interruption is needed (no-gap-with-interruption) and the concurrent MG; a third capability for supporting a plurality of sets of NCSG configurations and not supporting performing parallel measurements according to an NCSG, for example, the third capability is a capability for supporting the plurality of sets of NCSG configurations and not supporting performing the parallel measurements according to the NCSG and a concurrent MG on a plurality of RF chains, or a capability of unable to perform the parallel measurements according to different NCSGs on a plurality of RF chains; or a fourth capability for supporting a plurality of sets of NCSG configurations, and performing parallel measurements according to an NCSG and a concurrent MG, for example, the fourth capability is a capability for supporting the plurality of sets of NCSG configurations and performing the parallel measurements according to the NCSG and the concurrent MG on a plurality of RF chains, or a capability for performing parallel measurements according to different NCSGs on a plurality of RF chains.

It may be understood that the concurrent MG indicates an MG that may have a time-domain conflict with the NCSG or with the NFG is that no MG is needed, and a specific type of the concurrent MG is not limited. For example, the concurrent MG may be a legacy MG or a pre-configured MG.

Optionally, the measurement occasion for which the NFG is that no MG is needed refers to a measurement period or a measurement window in a scenario where the NFG is that no MG is needed. In addition, the measurement occasion in the concurrent MG is its corresponding measurement gap length (MGL), and the measurement occasion in the NCSG is its corresponding ML.

Optionally, when supporting the first capability, the terminal 101 may perform measurements simultaneously on different RF chains. For example, the terminal 101 performs a measurement based on the NCSG on an RF chain and performs a measurement based on the concurrent MG on another RF chain.

Optionally, when supporting the second capability, the terminal 101 may perform measurements simultaneously on different RF chains. For example, the terminal 101 performs a measurement based on the NFG of no-gap-with-interruption on an RF chain and performs a measurement based on the concurrent MG on another RF chain.

Optionally, when supporting the third capability or the fourth capability, the terminal 101 may have an main RF chain and a plurality of idle RF chains. K sets of NCSGs may be configured, where K≥2 and K is a positive integer; and a number of the idle RF chains may be K, or there is a corresponding relationship between the number of the idle RF chains and a number of the NCSGs. For example, when supporting the fourth capability, the terminal 101 may perform measurements simultaneously on the plurality of idle RF chains, and measurements may be performed on each idle RF chain based on the NCSGs.

In some embodiments, the network device 102 receives the first information.

At S2102, the terminal 101 determines a measurement parameter according to a capability.

In some embodiments, the measurement parameter may be a parameter required by a protocol in an L3 measurement. For example, the measurement parameter is a parameter $K_p$ required by the L3 measurement. $K_p$ is a scaling factor of an SSB-based measurement that does not need an MG and an SSB-based measurement that is based on an NCSG. This parameter is used to solve an L3 measurement in a scenario where a measurement occasion that does not need an MG conflicts with an ML of an NCSG.

In some embodiments, in an implementation of S2102, the terminal 101 may determine or judge a capability it supports.

Optionally, the terminal 101 determines whether to support the first capability, or determines whether to support the second capability, or determines whether to support the fourth capability.

In some embodiments, if the terminal 101 supports the first capability, the second capability, or the fourth capability, the terminal 101 may determine $K_p$ according to a method in a relevant protocol, and there is no need to consider the NCSG or a measurement occasion indicated by the NFG as "no-gap", "no-gap-no-interruption", or "no-gap-with-interruption" in a process of determining $K_p$.

Optionally, the terminal 101 determines whether to support the third capability.

In some embodiments, when the terminal 101 supports the third capability, S2102 may adopt S2102-1.

At S2102-1, the terminal 101 determines a scaling factor $K_p$ of an L3 measurement according to a time-domain conflict between a plurality of sets of NCSGs and a measurement occasion for which no MG is needed.

Optionally, $K_p$ satisfies: $K_p = N_{total} / N_{available}$, in which $N_{total}$ represents a total number of SMTC occasions within a first window, and $N_{available}$ represents a number of SMTC occasions within the first window that do not overlap with any non-dropped measurement occasion or an ML of the NCSG.

Optionally, $N_{total}$ includes SMTC occasions within the first window that overlap with a measurement occasion or SMTC occasions within the first window that overlap with the ML of the NCSG.

Optionally, the first window is a maximum value between a period of the SMTC occasions and a maximum measurement gap repetition period (MGRP_max), that is, the first window is max (SMTC period, MGRP_max).

A start time of the first window is a start time of any SMTC occasion.

The maximum MGRP, i.e., MGRP_max, is a maximum value among MGRPs of configured first part MGs and VIRPs of configured first part NCSGs.

When MGs and NCSGs are per-UE configurations, the first part MGs include all configured MGs, and the first part NCSGs include all configured NCSGs. When MGs and NCSGs are per-FR configurations, the first part MGs include an MG corresponding to an FR that is the same as a reference signal frequency such as an SSB, and the first part NCSGs include an NCSG corresponding to an FR that is the same as an SSB frequency. The SSB may be a target SSB to be measured.

Optionally, $K_p$ is 1 in a case that $N_{available}$ is 0.

In an example, the terminal 101 that supports the third capability may be configured with a plurality of sets of NCSGs and has a plurality of idle RF chains, and may not support parallel measurements on a plurality of RF chains simultaneously. Therefore, in measurement processes in different RF chains, if an ML of an NCSG conflicts with a measurement occasion for which no MG is needed on any RF chain, a VIRP of the NCSG on the RF chain may be scaled within an SMTC occasion that does not overlap with a non-dropped MG occasion according to $K_p$. For example, a measurement of an MO is performed in an ML of each $K_p*VIRP$ on the RF chain. If corresponding to a specific MO, a measurement occasion of the MO may be determined according to a CSSF. For example, a first measurement occasion of the MO is measured in an ML of a first VIRP, and a next measurement occasion may be measured in an ML of $(Kp*CSSF*VIRP)^{th}$ VIRP.

In some embodiments, the measurement parameter may be a parameter required by a protocol in the L1 measurement. For example, it is a parameter P required for the L1 measurement based on an SSB resource. P is used to solve the L1 measurement in a scenario where an L1 measurement reference signal conflicts with an L3 measurement occasion. The L3 measurement occasion may refer to an SMTC occasion, or an MG occasion, or an ML of an NCSG.

In some embodiments, if the terminal 101 supports the first capability, the second capability, or the fourth capability, the terminal 101 may determine P according to a method in a relevant protocol, and the NCSG does not need to be considered in a process of determining P.

In some embodiments, when the terminal 101 supports the third capability, S2102 may adopt S2102-2.

At S2102-2, the terminal 101 determines a parameter P of an L1 measurement according to a time-domain conflict between a plurality of sets of NCSGs and a measurement occasion for which no MG is needed.

Optionally, P satisfies: in an FR1, $P = N_{total}' / N_{outside\_MG}$; or in an FR2 and $N_{available}' = 0$, P = sharing factor $* N_{total}' / N_{outside\_MG}$, or in the FR2 and $N_{available}' > 0$, $P = N_{total}' / N_{available}'$, in which $N_{total}'$ represents a total number of reference signal resource occasions (such as SSB/channel state information-reference signal (CSI-RS) resource occasions) within a second window; $N_{outside\_MG}$ represents a number of reference signal resource occasions within the second window that do not overlap with an MG or a number of reference signal resource occasions within the second window that do not overlap with an ML of the NCSG; $N_{available}'$ represents a number of reference signal resource occasions within the second window that do not overlap with any of the MG, an SMTC occasion, or the ML of the NCSG.

The reference signal resource occasion refers to a reference signal resource occasion used for the L1 measurement, such as an SSB resource occasion or a CSI-RS resource occasion.

Optionally, the sharing factor is a Psharing factor. The sharing factor is used to further restrict a time-domain positional relationship between a reference signal (such as an SSB) corresponding to $N_{outside\_MG}$ and an SSB of the L3 measurement.

If a reference signal located outside the MG and used for L1 reference signal received power (L1-RSRP) satisfies a set condition, Psharing factor = 1. The set condition is as follows.

One is: SSB-ToMeasure is configured, the above reference signal does not overlap with an SSB indicated in the SSB-ToMeasure, and the above reference signal does not overlap with a data symbol before the a continuous SSB symbol and a data symbol after the continuous SSB symbol indicated in the SSB-ToMeasure. The other one is: ss-RSSI-Measurement is configured, the above reference signal does not overlap with a receive signal strength indication (RSSI) symbol indicated in ss-RSSI-Measurement, and the above reference signal does not overlap with a data symbol before a continuous RSSI symbol and a data symbol after the continuous RSSI symbol indicated by the ss-RSSI-Measurement. If the above set condition is not satisfied, Psharing factor = 3.

Optionally, $N_{total}'$ includes one of: a reference signal resource occasion within the second window that overlaps with an MG, a reference signal resource occasion that overlaps with the SMTC occasion, or a reference signal resource occasion that overlaps with the ML of the NCSG.

Optionally, the second window is a maximum value between a period (TL1) of a reference signal, such as an SSB or a CSI-RS, and a maximum measurement gap repetition period (MGRP_max), in which the MGRP_max is a maximum value among MGRPs of configured first part MGs and VIRPs of configured first part NCSGs. If MGs and NCSGs are per-UE configurations, the first part MGs include all configured MGs, and the first part NCSGs include all configured NCSGs; or if MGs and NCSGs are per-FR configurations, the first part MGs include an MG corresponding to an FR that is the same as a reference signal frequency, and the first part NCSGs include an NCSG corresponding to the FR that is the same as the reference signal frequency, in which a starting time of the second window is a starting time of any reference signal resource occasion, such as an SSB resource occasion.

The TL1 may be a period of a target SSB.

In an example, an L1 measurement is performed on a main RF chain. For the terminal 101 that supports the third capability, the terminal 101 does not support performing NCSG-based measurements simultaneously in different idle RF chains. In this scenario, when a reference signal resource of the L1 measurement on the main RF chain conflicts with an NCSG measurement on an idle RF chain, the L1 measurement may be performed on a reference signal resource occasion on the main RF chain that do not overlap with any of an MG relevant to the L3 measurement, an SMTC occasion relevant to the L3 measurement, or an ML of an NCSG, according to P under the FR1 or the FR2.

At S2103, the terminal 101 performs a corresponding measurement according to the measurement parameter.

In some embodiments, for a method that terminals 101 with different capabilities perform the L3 measurement according to $K_p$, reference may be made to the description in the above embodiments.

In some embodiments, for a method that terminals 101 with different capabilities perform the L1 measurement according to P, reference may be made to the description in the above embodiments.

In some embodiments, terminals 101 with different capabilities may also perform a measurement according to a CSSF required for the L3 measurement. The CSSF is a parameter used to scale measurement delay for a specific MO in a scenario where a plurality of MOs are configured.

In an example, in a case that the terminal supports the first capability, the second capability or the fourth capability, a CSSF of an L3 measurement is applicable to a first MO associated with the NCSG.

In this example, the first MO includes at least one of: an SSB-based intra-frequency MO requiring the NCSG to perform measurement, optionally, the NCSG may correspond to an NCSG of an activated serving cell (in non-dormancy); or an inter-system MO (such as an E-UTRA inter-RAT MO) for which a measurement is completed by using an NCSG.

In another example, in a case that the terminal supports the third capability, a CSSF of an L3 measurement is applicable to a second MO associated with the NCSG.

In this example, the second MO includes at least one of: an SSB-based intra-frequency MO requiring no MG, in which all SMTC occasions of the SSB-based intra-frequency MO overlap with the NCSG, optionally, requiring no MG corresponds to an activated serving cell; an SSB-based intra-frequency MO requiring the NCSG, optionally, the NCSG corresponds to an NCSG of an activated serving cell in non-dormancy; an SSB-based intra-frequency MO, in which all or some of SMTC occasions of the SSB-based intra-frequency MO overlap with the NCSG, optionally, the NCSG corresponds to an NCSG of a deactivated serving cell or an activated serving cell in dormancy; an SSB-based inter-frequency MO requiring no MG, in which all SMTC occasions of the SSB-based inter-frequency MO overlap with the NCSG; an SSB-based inter-frequency MO requiring the NCSG; or an inter-system MO requiring the NCSG.

Optionally, the terminal 101 measures the second MO according to the NCSG.

Optionally, each set of NCSGs in a plurality of sets of NCSGs has a corresponding CSSF.

The terminal 101 supports the third capability. If the terminal 101 is configured with K NCSG patterns, and if an association between an MO and an NCSG pattern is configured by a network, a CSSF is calculated separately for each NCSG pattern. When determining a CSSF of a target MO, only MOs associated with a same MG pattern may be calculated.

In some embodiments, names of information and the like are not limited to names recorded in the embodiments. Terms such as "information", "message", "signal", "signaling", "report", "configuration", "indication", "instruction", "command", "channel", "parameter", "domain", "field", etc., may be used interchangeably.

In some embodiments, "acquire", "obtain", "get", "receive", "transmit", "bidirectional transmission", "send and/or receive" may be used interchangeably, and they may be interpreted as receiving from another entity, obtaining from a protocol, obtaining from a higher layer, obtaining via processing by itself, autonomously implementing, and other meanings.

In some embodiments, terms such as "send", "emit", "report", "deliver", "transmit", "bidirectional transmission", "send and/or receive" may be used interchangeably.

In some embodiments, terms such as "uplink", "physical uplink", etc. may be used interchangeably; terms such as "downlink", "physical downlink", etc. may be used interchangeably; and terms such as "side", "sidelink", "side communication", "sidelink communication", "direct connection", "direct link", "direct communication", "direct link communication", etc. may be used interchangeably.

In some embodiments, terms such as "downlink control information (DCI)", "downlink (DL) assignment", "DL DCI", "uplink (UL) grant", "UL DCI", etc. may be used interchangeably.

**In** some embodiments, terms such as "physical downlink shared channel (PDSCH)", "DL data", etc. may be used interchangeably; and terms such as "physical uplink shared channel (PUSCH)", "UL data", etc. may be used interchangeably.

In some embodiments, terms such as "component carrier (CC)", "cell", "frequency carrier", "carrier frequency", etc. may be used interchangeably.

In some embodiments, terms such as "certain", "preseted", "preset", "set", "indicated", "a/an", "any", "first", etc. may be used interchangeably. "Certain A", "preseted A", "preset A", "set A", "indicated A", "a/an A", "any A", "first A" may be interpreted as A predefined in a protocol, etc., or as A obtained via setting, configuration, or indication, etc., or as a certain A, a/an A, any A, or a first A, etc., which is not limited thereto.

**In** some embodiments, judging or determining may be performed using a value represented by 1 bit (0 or 1), or by a true value or a false value represented by true or false (boolean value), or by numerical comparison (e.g., comparison with a predetermined value), which is not limited thereto.

In some embodiments, "does not expect to receive" may be interpreted as not receiving on a time-domain resource and/or a frequency-domain resource, or as not performing subsequent processing on received data after receiving the data; and "does not expect to send" may be interpreted as not sending, or as sending but not expecting a receiver to respond to content that is sent.

The communication method involved in embodiments of the present disclosure may include at least one of S2101 to S2103. For example, S2101 may be implemented as an independent embodiment, a combination of S2101 and S2102 may be implemented as an independent embodiment, and a combination of S2101 to S2103 may be implemented as an independent embodiment, but it is not limited thereto.

**In** some embodiments, S2102 and S2103 are optional. In different embodiments, one or more of these steps may be omitted or substituted.

In some embodiments, reference may be made to other optional implementations recorded before or after the description corresponding to FIG. 2a.

FIG. 3a is a schematic diagram of an interaction of a communication method according to an embodiment of the present disclosure. As shown in FIG. 3a, embodiments of the present disclosure relate to a communication method, performed by the terminal 101. The above method includes following steps at S3101 to S3103.

At S3101, the terminal 101 sends first information.

In some embodiments, for an implementation of S3101, reference may be made to the implementation of S2101, which is not repeated here.

In some embodiments, the terminal 101 may send the first information to the network device 102 or another entity.

**At** S3102, the terminal 101 determines a measurement parameter according to a capability.

In some embodiments, for an implementation of S3102, reference may be made to the implementation of S2102, which is not repeated here.

At S3103, the terminal 101 performs a corresponding measurement according to the measurement parameter.

In some embodiments, for an implementation of S3103, reference may be made to the implementation of S2103, which is not repeated here.

The communication method involved in embodiments of the present disclosure may include at least one of S3101 to S3103. For example, S3101 may be implemented as an independent embodiment, a combination of S3101 and S3102 may be implemented as an independent embodiment, and a combination of S3101 to S3103 may be implemented as an independent embodiment, but it is not limited thereto.

In some embodiments, S3102 and S3103 are optional. In different embodiments, one or more of these steps may be omitted or substituted.

In some embodiments, reference may be made to other optional implementations recorded before or after the description corresponding to FIG. 3a.

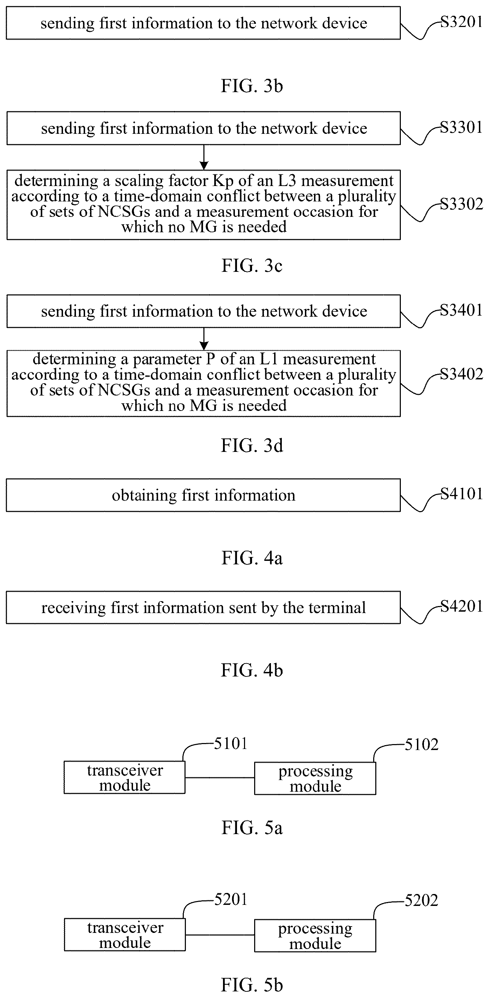

FIG. 3b is a schematic diagram of an interaction of a communication method according to an embodiment of the present disclosure. As shown in FIG. 3b, embodiments of the present disclosure relate to a communication method, performed by the terminal 101. The above method includes a following step at S3201.

At S3201, the terminal 101 sends first information to the network device 102.

In some embodiments, for an implementation of S3201, reference may be made to the implementation of S2101, which is not repeated here.

In some embodiments, the first information indicates a terminal capability of the terminal for simultaneously performing measurements on different RF chains.

In some embodiments, the terminal capability includes at least one of: a first capability for performing parallel measurements simultaneously according to an NCSG and a concurrent MG on different RF chains; a second capability for performing parallel measurements simultaneously according to a measurement occasion for which an NFG is that no MG is needed and a concurrent MG on different RF chains; a third capability for supporting a plurality of sets of NCSG configurations and not supporting performing parallel measurements according to an NCSG on a plurality of RF chains; or a fourth capability for supporting a plurality of sets of NCSG configurations, and performing parallel measurements according to an NCSG on a plurality of RF chains.

In some embodiments, the terminal 101 may determine a measurement parameter in a measurement process according to its own capability.

In some embodiments, the terminal 101 may perform a corresponding measurement according to the measurement parameter.

Optionally, terminals 101 with different capabilities may perform measurements according to a CSSF required for the L3 measurement. The CSSF is a parameter used to scale measurement delay for a specific MO when a plurality of MOs are configured.

In an example, in a case that the terminal supports the first capability, the second capability or the fourth capability, a CSSF of an L3 measurement is applicable to a first MO associated with the NCSG.

In this example, the first MO includes at least one of: an SSB-based intra-frequency MO requiring the NCSG to perform measurement; or an inter-system MO requiring the NCSG to complete measurement.

In another example, in a case that the terminal supports the third capability, a CSSF of an L3 measurement is applicable to a second MO associated with the NCSG.

In this example, the second MO includes at least one of: an SSB-based intra-frequency MO requiring no MG, in which all SMTC occasions of the SSB-based intra-frequency MO overlap with the NCSG; an SSB-based intra-frequency MO requiring the NCSG; an SSB-based intra-frequency MO, in which all or some of SMTC occasions of the SSB-based intra-frequency MO overlap with the NCSG; an SSB-based inter-frequency MO requiring no MG, in which all SMTC occasions of the SSB-based inter-frequency MO overlap with the NCSG; an SSB-based inter-frequency MO requiring the NCSG; or an inter-system MO requiring the NCSG.

In this example, the terminal 101 measures the second MO according to the NCSG.

In this example, each set of NCSGs in a plurality of sets of NCSGs has a corresponding CSSF.

In some embodiments, reference may be made to other optional implementations recorded before or after the description corresponding to FIG. 3b.

FIG. 3c is a schematic diagram of an interaction of a communication method according to an embodiment of the present disclosure. As shown in FIG. 3c, embodiments of the present disclosure relate to a communication method, performed by the terminal 101. The above method includes following steps at S3301 to S3302.

At S3301, the terminal 101 sends first information to the network device 102.

In some embodiments, for an implementation of S3301, reference may be made to the implementation of S2101, which is not repeated here.

In some embodiments, the first information indicates a terminal capability of the terminal for simultaneously performing measurements on different RF chains.

At S3302, the terminal 101 determines a scaling factor $K_p$ of an L3 measurement according to a time-domain conflict between a plurality of sets of NCSGs and a measurement occasion for which no MG is needed.

In some embodiments, for an implementation of S3302, reference may be made to the related implementation of S2102-1, which is not repeated here.

In some embodiments, the terminal 101 supports a third capability, and the terminal 101 performs S3302.

In some embodiments, $K_p$ satisfies: $K_p = N_{total} / N_{available}$, in which $N_{total}$ represents a total number of SMTC occasions within a first window, and $N_{available}$ represents a number of SMTC occasions within the first window that do not overlap with any non-dropped measurement occasion or an ML of the NCSG.

Optionally, $N_{total}$ includes SMTC occasions within the first window that overlap with a measurement occasion or SMTC occasions within the first window that overlap with the ML of the NCSG.

Optionally, the first window is a maximum value between a period of the SMTC occasions and a maximum measurement gap repetition period (MGRP_max), and the MGRP_max is a maximum value among MGRPs of configured first part MGs and VIRPs of configured first part NCSGs. If MGs and NCSGs are per-UE configurations, the first part MGs include all configured MGs, and the first part NCSGs include all configured NCSGs. If MGs and NCSGs are per-FR configurations, the first part MGs include an MG corresponding to an FR that is the same as an SSB frequency. A starting time of the first window is a starting time of any SMTC occasion.

Optionally, $K_p$ is 1 in a case that $N_{available}$ is 0.

In some embodiments, reference may be made to other optional implementations recorded before or after the description corresponding to FIG. 3c.

FIG. 3d is a schematic diagram of an interaction of a communication method according to an embodiment of the present disclosure. As shown in FIG. 3d, embodiments of the present disclosure relate to a communication method, performed by the terminal 101. The above method includes following steps at S3401 to S3402.

At S3401, the terminal 101 sends first information to the network device 102.

In some embodiments, for an implementation of S3401, reference may be made to the implementation of S2101, which is not repeated here.

In some embodiments, the first information indicates a terminal capability of the terminal for simultaneously performing measurements on different RF chains.

At S3402, the terminal 101 determines a parameter P of an L1 measurement according to a time-domain conflict between a plurality of sets of NCSGs and a measurement occasion for which no MG is needed.

In some embodiments, for an implementation of S3402, reference may be made to the related implementation of S2102-1, which is not repeated here.

In some embodiments, the terminal 101 supports a third capability, and the terminal 101 performs S3402.

In some embodiments, in an FR1, $P = N_{total}' / N_{outside\_MG}$; or in an FR2 and $N_{available}' = 0$, $P =$ sharing factor $* N_{total}' / N_{outside\_MG}$, or in the FR2 and $N_{available}' > 0$, $P = N_{total}' / N_{available}'$, in which $N_{total}'$ represents a total number of reference signal resource occasions within a second window, such as an SSB resource occasion; $N_{outside\_MG}$ represents a number of reference signal resource occasions within the second window that do not overlap with an MG or a number of reference signal resource occasions within the second window that do not overlap with an ML of the NCSG; $N_{available}'$ represents a number of reference signal resource occasions within the second window that do not overlap with any of the MG, an SMTC occasion, or the ML of the NCSG; and the sharing factor represents a constant determined according to a protocol.

Optionally, $N_{total}'$ includes one of: a reference signal resource occasion within the second window that overlaps with an MG, an SSB resource occasion that overlaps with the SMTC occasion, or a reference signal resource occasion that overlaps with the ML of the NCSG.

Optionally, the second window is a maximum value between a period of a reference signal and a maximum measurement gap repetition period (MGRP_max), in which the MGRP_max is a maximum value among MGRPs of configured first part MGs and VIRPs of configured first part NCSGs. If MGs and NCSGs are per-UE configurations, the first part MGs include all configured MGs, and the first part NCSGs include all configured NCSGs. If MGs and NCSGs are per-FR configurations, the first part MGs include an MG corresponding to an FR that is the same as a reference signal frequency, and the first part NCSGs include an NCSG corresponding to the FR that is the same as the reference signal frequency, in which a starting time of the second window is a starting time of any reference signal resource occasion.

In some embodiments, reference may be made to other optional implementations described before or after the description corresponding to FIG. 3d.

FIG. 4a is a schematic diagram of an interaction of a communication method according to an embodiment of the present disclosure. As shown in FIG. 4a, embodiments of the present disclosure relate to a communication method, performed by the network device 102. The above method includes a following step at S4101.

At S4101, the network device 102 obtains first information.

In some embodiments, for an implementation of S4101, reference may be made to the implementation of S2101, which is not repeated here.

In some embodiments, the network device 102 may obtain or receive the first information from the terminal 101, or obtain the first information from another entity.

In some embodiments, for an operation of the terminal 101, reference may also be made to the description of the relevant implementations in FIG. 2a, which is not repeated here.

In some embodiments, reference may be made to other optional implementations described before or after the description corresponding to FIG. 4a.

FIG. 4b is a schematic diagram of an interaction of a communication method according to an embodiment of the present disclosure. As shown in FIG. 4b, embodiments of the present disclosure relate to a communication method, performed by the network device 102. The above method includes a following step at S4201.

At S4201, the network device 102 receives first information sent by the terminal.

In some embodiments, for an implementation of S4201, reference may be made to the implementation of S2101, which is not repeated here.

In some embodiments, the first information indicates a terminal capability of the terminal for simultaneously performing measurements on different RF chains.

In some embodiments, the terminal capability includes at least one of: a first capability for performing parallel measurements simultaneously according to an NCSG and a concurrent MG on different RF chains; a second capability for performing parallel measurements simultaneously according to a measurement occasion for which an NFG is that no MG is needed and a concurrent MG on different RF chains; a third capability for supporting a plurality of sets of NCSG configurations and not supporting performing parallel measurements according to an NCSG on a plurality of RF chains; or a fourth capability for supporting a plurality of sets of NCSG configurations, and performing parallel measurements according to an NCSG on a plurality of RF chains.

In some embodiments, a scaling factor $K_p$ of an L3 measurement satisfies: $K_p = N_{total} / N_{available}$, in which $N_{total}$ represents a total number of SMTC occasions within a first window, and $N_{available}$ represents a number of SMTC occasions within the first window that do not overlap with any non-dropped measurement occasion or an ML of the NCSG, in which the terminal supports the third capability.

Optionally, $N_{total}$ includes SMTC occasions within the first window that overlap with a measurement occasion or SMTC occasions within the first window that overlap with the ML of the NCSG.

Optionally, the first window is a maximum value between a period of the SMTC occasions and a maximum measurement gap repetition period (MGRP_max), and the MGRP_max is a maximum value among MGRPs of configured first part MGs and VIRPs) of configured first part NCSGs. If MGs and NCSGs are per-UE configurations, the first part MGs include all configured MGs, and the first part NCSGs include all configured NCSGs. If MGs and NCSGs are per-FR configurations, the first part MGs include an MG corresponding to an FR that is the same as an SSB frequency, and the first part NCSGs include an NCSG corresponding to the FR that is the same as the SSB frequency, in which a starting time of the first window is a starting time of any SMTC occasion.

Optionally, $K_p$ is 1 in a case that $N_{available}$ is 0.

In some embodiments, in a case that the terminal supports the first capability, the second capability or the fourth capability, a CSSF of an L3 measurement is applicable to a first MO associated with the NCSG.

Optionally, the first MO includes at least one of: an SSB-based intra-frequency MO requiring the NCSG to perform measurement; or an inter-system MO requiring the NCSG to complete measurement.

In some embodiments, in a case that the terminal supports the third capability, a CSSF of an L3 measurement is applicable to a second MO associated with the NCSG.

Optionally, the second MO includes at least one of: an SSB-based intra-frequency MO requiring no MG, in which all SMTC occasions of the SSB-based intra-frequency MO overlap with the NCSG; an SSB-based intra-frequency MO requiring the NCSG; an SSB-based intra-frequency MO, in which all or some of SMTC occasions of the SSB-based intra-frequency MO overlap with the NCSG; an SSB-based inter-frequency MO requiring no MG, in which all SMTC occasions of the SSB-based inter-frequency MO overlap with the NCSG; an SSB-based inter-frequency MO requiring the NCSG; or an inter-system MO requiring the NCSG.

Optionally, each set of NCSGs in a plurality of sets of NCSGs has a corresponding CSSF.

In some embodiments, a parameter P of L1 measurement satisfies: in an FR1, $P = N_{total}' / N_{outside\_MG}$; or in an FR2 and $N_{available}' = 0$, $P = $ sharing factor $* N_{total}' / N_{outside\_MG}$, or in the FR2 and $N_{available}' > 0$, $P = N_{total}' / N_{available}'$, in which $N_{total}'$ represents a total number of reference signal resource occasions within a second window, such as an SSB resource occasion; $N_{outside\_MG}$ represents a number of reference signal resource occasions within the second window that do not overlap with an MG or a number of reference signal resource occasions within the second window that do not overlap with an ML of the NCSG; $N_{available}'$ represents a number of reference signal resource occasions within the second window that do not overlap with any of the MG, an SMTC occasion, or the ML of the NCSG; and the sharing factor represents a constant determined according to a protocol, in which the terminal supports the third capability.

Optionally, $N_{total}'$ includes one of: a reference signal resource occasion within the second window that overlaps with an MG, a reference signal resource occasion that overlaps with the SMTC occasion, or a reference signal resource occasion that overlaps with the ML of the NCSG.

Optionally, the second window is a maximum value between a period of a reference signal and a maximum measurement gap repetition period (MGRP_max), in which the MGRP_max is a maximum value among MGRPs of configured first part MGs and VIRPs of configured first part NCSGs, in which MGs and NCSGs are per-UE configurations, the first part MGs include all configured MGs, and the first part NCSGs include all configured NCSGs; or in which MGs and NCSGs are per-FR configurations, the first part MGs include an MG corresponding to an FR that is the same as the SSB frequency, and the first part NCSGs include an NCSG corresponding to the FR that is the same as the SSB frequency, in which a starting time of the second window is a starting time of any reference signal resource occasion.

In some embodiments, reference may be made to other optional implementations described before or after the description corresponding to FIG. 4b.

To facilitate understanding of the method in embodiments of the present disclosure, some specific examples are listed below.

Example one:

In embodiments of the present disclosure, following three types of UE capabilities are involved:

①A UE capability, where a UE supporting this capability may support parallel measurements of an NCSG and other concurrent MGs in an NCSG+concurrent MGs scenario. Optionally, this capability corresponds to the first capability in the above embodiments.

②A UE capability, where a UE supporting this capability may support parallel measurements of an MG with no-gap-with-interruption under NeedForGaps and other concurrent MGs in a NeedForGaps+concurrent MGs scenario. Optionally, this capability corresponds to the second capability in the above embodiments.

③A UE capability, where a UE supporting this capability supports K sets of NCSG patterns, in which K≥2 and K is a positive integer. Optionally, this capability corresponds to the third capability or the fourth capability in the above embodiments.

Example two:

The UE reports capability information via a radio resource control (RRC) message.

Example three:

For the $K_p$ parameter required by the L3 measurement, that is, the L3 measurement is used to address a scenario where a measurement occasion that no MG is needed conflicts with the ML of the NCSG:

(1) If the UE supports capability ① or capability ②, the NCSG does not need to be considered in a calculation of $K_p$.

(2) If the UE supports the third capability, a definition of $K_p$ is modified to consider conflicts between a plurality of sets of NCSGs and a measurement occasion for which no MG is needed, for example:

$K_p$ is a scaling factor of an SSB-based measurement that no MG is needed and an SSB-based measurement according to the NCSG.

For a window W of max(SMTC period, MGRP_max), in which MGRP_max is a maximum value among MGRPs and VIRPs of NCSGs of per-UE MGs and/or per-FR MGs within an FR that is the same as the SSB frequency, and a starting time of W is a starting time of any SMTC occasion. Optionally, the window W corresponds to the first window in the above embodiments.

$N_{total}$ represents a total number of SMTC occasions within the window W, including SMTC occasions within the window W that overlap with a measurement occasion or SMTC occasions within the window W that overlap with the ML of the NCSG.

$N_{available}$ represents a number of SMTC occasions within the window W that do not overlap with any non-dropped measurement occasion or an ML of the NCSG after considering an MG collision according to MG collision rules in a relevant protocol.

$K_p$ is 1 in a case that $N_{available}$ is 0.

Example four:

**For** a CSSF parameter required by the L3 measurement, that is, the parameter used to scale a measurement delay of a specific MO in a scenario where a plurality of MOs are configured, i.e., an NCSG measurement is needed:

(1) If the UE supports capability ① or capability ② or the fourth capability, a definition of the CSSF is modified to only consider a number of MOs associated with the NCSG, for example, modified as follows.

A carrier-specific scaling factor (CSSFwithin_ncsg,I) of an MO I applies to MOs of following measurement types: an SSB-based intra-frequency MO requiring the NCSG to perform measurement, optionally, the NCSG may correspond to an NCSG of an activated serving cell (in non-dormancy); or an inter-system MO requiring the NCSG to complete measurement, in which no MG outside the NCSG is available to perform a measurement.

Optionally, the MO I in (1) corresponds to the first MO in the above embodiments.

**(2)** If the UE supports the third capability in capability ③, a definition of the CSSF is modified to distinguish a number of MOs performing a measurement under a plurality of sets of NCSGs, for example, modified as follows.

A carrier-specific scaling factor (CSSFwithin_ncsg,I) of an MO I applies to MOs of following measurement types: an SSB-based intra-frequency MO requiring no MG, in which all SMTC occasions of the SSB-based intra-frequency MO overlap with the NCSG, optionally, requiring no MG corresponds to an activated serving cell; an SSB-based intra-frequency MO requiring the NCSG, optionally, the NCSG corresponds to an NCSG of an activated serving cell in non-dormancy; an SSB-based intra-frequency MO, in which all or some of SMTC occasions of the SSB-based intra-frequency MO overlap with the NCSG, optionally, the NCSG corresponds to an NCSG of a deactivated serving cell or an activated serving cell in dormancy; an SSB-based inter-frequency MO requiring no MG, in which all SMTC occasions of the SSB-based inter-frequency MO overlap with the NCSG; an SSB-based inter-frequency MO requiring the NCSG; or an inter-system MO requiring the NCSG.

Optionally, the MO I in (2) corresponds to the second MO in the above embodiments.

Optionally, in (2), the UE is expected to perform a measurement of the MO I only within the NCSG.

Optionally, if the UE supports capability ③ and is configured with K NCSG patterns, and if an association between an MO and an NCSG pattern is configured by a network, a CSSF is calculated separately for each NCSG pattern. When determining a CSSF of a target MO and when deriving CSSFwithin_ncsg,I of the target MO with an index I, only MOs associated with a same MG pattern are calculated.

Example five:

For the P parameter required by the L1 measurement, that is, the L1 measurement used to address a scenario where an L1 measurement reference signal conflicts with the NCSG:

(1) If the UE supports capability ① or capability ②, the NCSG does not need to be considered in a calculation of P.

(2) If the UE supports capability ③, a definition of P is modified to consider conflicts between a plurality of sets of NCSGs and a measurement occasion for which no MG is needed, for example:

A P value of a SSB resource to be measured is defined as: in an FR1, $P = N_{total}' / N_{outside\_MG}$; or in an FR2 and $N_{available}' = 0$, $P = $ sharing factor $* N_{total}' / N_{outside\_MG}$, or in the FR2 and $N_{available}' > 0$, $P = N_{total}' / N_{available}'$.

For a window W of max(TL1, MGRP_max), in which MGRP_max is a maximum value among MGRPs and VIRPs of NCSGs of per-UE MGs and/or per-FR MGs within an FR that is the same as a serving cell, and a starting time of W is a starting time of any SSB resource occasion. Optionally, the window W corresponds to the second window in the above embodiments.

$N_{total}'$ represents a total number of SSB resource occasions within the window W, including: SSB resource occasions within the window W that overlap with an MG, SSB resource occasions that overlap with the SMTC occasion, or SSB resource occasions that overlap with the ML of the NCSG.

$N_{outside\_MG}$ represents a number of SSB resource occasions within the window W that do not overlap with an MG or a number of SSB resource occasions within the window W that do not overlap with an ML of the NCSG; and $N_{available}'$ represents a number of SSB resource occasions within the window W that do not overlap with any of the MG, an SMTC occasion, or the ML of the NCSG. TL1 is a period of a target SSB.

Embodiments of the present disclosure also provide an apparatus for implementing any one of the above methods. For example, an apparatus is provided, including units or modules for implementing steps performed by a terminal in any one of the above methods. Furthermore, another apparatus is provided, including units or modules for implementing steps performed by a network device (for example, an access network device, a core network function node, a core network device, etc.) in any one of the above methods.

It should be understood that the division of units or modules in the above apparatuses is merely a division of logical functions. In actual implementations, the units may be fully or partially integrated into a single physical entity or may be physically separated. In addition, the units or modules in the apparatus may be implemented in a form of a processor invoking software. For example, the apparatus includes a processor, which is connected to a memory for storing instructions. The processor invokes the instructions stored in the memory to implement any one of the above methods or the functions of the units or modules in the apparatus. The processor may be a general-purpose processor, such as a central processing unit (CPU) or a microprocessor, and the memory may be internal or external to the apparatus. Or, the units or modules in the apparatus may be implemented in a form of a hardware circuit. Some or all of the functions of the units or modules may be realized via a design of the hardware circuit. The hardware circuit may be understood as one or more processors. For example, in an implementation, the hardware circuit is an application-specific integrated circuit (ASIC). Functions of some or all of the units are realized by designing logical relationships among components in the circuit. In another implementation, the hardware circuit may be implemented using a programmable logic device (PLD). Taking a field programmable gate array (FPGA) as an example, the FPGA may include a large number of logic gate circuits, and connection relationships among the logic gate circuits are configured by configuration files to realize the functions of some or all of the units or modules. All units or modules of the above apparatus may be fully implemented in a form of the processor invoking software, or fully implemented in a form of the hardware circuit, or partially implemented in a form of the processor invoking software and the remaining part implemented in a form of the hardware circuit.

In embodiments of the present disclosure, the processor is a circuit with a signal processing capability. In an implementation, the processor may be a circuit capable of reading and executing instructions, such as a central processing unit (CPU), a microprocessor, a graphics processing unit (GPU) (which may be understood as a microprocessor), or a digital signal processor (DSP). In another implementation, the processor may realize certain functions via a logical relationship of the hardware circuit. The logical relationship of the hardware circuit may be fixed or reconfigured. For example, the processor may be a hardware circuit implemented as an ASIC or PLD, such as an FPGA. In a reconfigurable hardware circuit, a process in which the processor loads configuration files to configure the hardware circuit may be understood as a process that the processor loads instructions to realize the functions of some or all of the units or the modules. In addition, the hardware circuit may be designed specifically for artificial intelligence and may be understood as an ASIC, such as a neural network processing unit (NPU), a tensor processing unit (TPU), or a deep learning processing unit (DPU).

FIG. 5a is a schematic diagram of a structure of a terminal 101 according to an embodiment of the present disclosure. As shown in FIG. 5a, a terminal 5100 may include at least one of a transceiver module 5101 or a processing module 5102. In some embodiments, the transceiver module 5101 is configured to send first information to a network device, in which the first information indicates a terminal capability of the terminal for simultaneously performing measurements on different RF chains.

Optionally, the transceiver module 5101 is configured to implement at least one of communication steps such as sending and/or receiving performed by the terminal 101 in any one of the above methods. Optionally, the processing module 5102 is configured to implement at least one of other steps performed by the terminal 101 in any one of the above methods.

FIG. 5b is a schematic diagram of a structure of a network device 102 according to an embodiment of the present disclosure. As shown in FIG. 5b, a terminal 5200 may include at least one of a transceiver module 5201 or a processing module 5202. In some embodiments, the transceiver module 5201 is configured to receive first information sent by a terminal, in which the first information indicates a terminal capability of the terminal for simultaneously performing measurements on different RF chains.

Optionally, the transceiver module 5201 is configured to implement at least one of communication steps such as sending and/or receiving performed by the network device 102 in any one of the above methods. Optionally, the processing module 5202 is configured to implement at least one of other steps performed by the network device 102 in any one of the above methods.

In some embodiments, the transceiver module may include a sending module and/or a receiving module. The sending module and the receiving module may be separate or integrated together. Optionally, the transceiver module may be interchanged with a transceiver.

In some embodiments, the processing module may be one module or may include a plurality of sub-modules. Optionally, the plurality of sub-modules respectively implement all or part of steps required to be performed by the processing module. Optionally, the processing module may be interchanged with a processor.

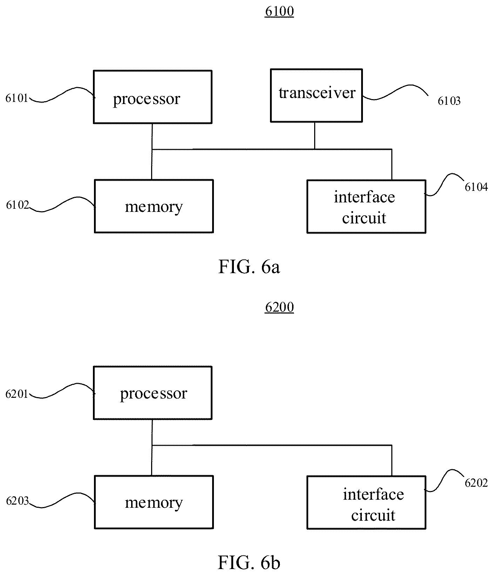

FIG. 6a is a block diagram of a communication device 6100 according to an embodiment of the present disclosure. The communication device 6100 may be a network device (for example, an access network device, a core network device, etc.), or may be a terminal (for example, a user equipment, etc.), or may be a chip, a chip system, or a processor, etc., that supports the network device to implement any one of the above methods, or may be a chip, a chip system, or a processor, etc., that supports the terminal to implement any one of the above methods. The communication device 6100 may be used to implement the methods described in the above method embodiments. For details, reference may be made to the description in the above method embodiments.

As shown in FIG. 6a, the communication device 6100 may include one or more processors 6101. The processor 6101 may be a general-purpose processor or a special-purpose processor. For example, it may be a baseband processor or a central processing unit. The baseband processor is configured to process communication protocols and communication data, and the central processor is configured to control communication devices (such as base stations, baseband chips, terminals, terminal chips, DU or CU, etc.) to execute computer programs and process computer program data. The communication device 6100 is configured to execute any one of the above methods.

In some embodiments, the communication device 6100 further includes one or more memories 6102 for storing instructions. Optionally, all or part of the memories 6102 may also be located outside the communication device 6100.

**In** some embodiments, the communication device 6100 further includes one or more transceivers 6103. When the communication device 6100 includes one or more transceivers 6103, the transceiver 6103 implements at least one of communication steps such as sending and/or receiving in the above method (for example, S2101 or S2102, but not limited to these), and the processor 6101 implements at least one of other steps (for example, S2103, S2104, or S2105, but not limited to these).

In some embodiments, the transceiver may include a receiver and/or a transmitter, which may be separate or integrated. Optionally, terms such as transceiver, transceiver unit, transceiver machine, transceiver circuit, etc. may be used interchangeably; terms such as transmitter, sending unit, transmitter machine, sending circuit, etc. may be used interchangeably; and terms such as receiver, receiving unit, receiver machine, receiving circuit, etc. may be used interchangeably.

In some embodiments, the communication device 6100 may include one or more interface circuits 6104. Optionally, the interface circuit 6104 is connected to the memory 6102. The interface circuit 6104 may be used to receive signals from the memory 6102 or other devices, and may be used to send the signals to the memory 6102 or other devices. For example, the interface circuit 6104 may read instructions stored in the memory 6102 and send the instructions to the processor 6101.

The communication device 6100 in the description of the above embodiments may be a network device or a terminal, but the scope of the communication device 6100 described in the disclosure is not limited thereto, and the structure of the communication device 6100 may not be limited by FIG. 6a. The communication device may be a stand-alone device or may be part of a larger device. For example, the communication device may be: (1) a stand-alone IC, a chip, a chip system or a subsystem; (2) a collection of ICs including one or more ICs. In some examples, the collection of ICs may also include storage components for storing data and computer programs; (3) an ASIC, such as a modem; (4) a module that may be embedded within other devices; (5) a receiver, a terminal, a smart terminal, a cellular phone, a wireless device, a handheld machine, a mobile unit, an in-vehicle device, a network device, a cloud device, an artificial intelligence device, and the like; and (6) others.

FIG. 6b is a block diagram of a chip 6200 according to an embodiment of the present disclosure. For the case where the communication device 6100 may be a chip or a chip system, reference may be made to the block diagram of the chip 6200 shown in FIG. 6b, but it is not limited to this.

The chip 6200 includes one or more processors 6201, and the chip 6200 is configured to execute any one of the above methods.

In some embodiments, the chip 6200 further includes one or more interface circuits 6202. Optionally, the interface circuit 6202 is connected to a memory 6203. The interface circuit 6202 may be used to receive signals from the memory 6203 or other devices, and the interface circuit 6202 may be used to send the signals to the memory 6203 or other devices. For example, the interface circuit 6202 may read instructions stored in the memory 6203 and send the instructions to the processor 6201.

In some embodiments, the interface circuit 6202 performs at least one of communication steps such as sending and/or receiving in the above method (for example, S2101 or S2102, but not limited to these), and the processor 6201 performs at least one of other steps (for example, S2103, S2104, or S2105, but not limited to these).

In some embodiments, terms such as interface circuit, interface, transceiver pin, transceiver, etc. may be used interchangeably.

In some embodiments, the chip 6200 further includes one or more memories 6203 for storing instructions. Optionally, all or some of the memories 6203 may be located outside the chip 6200.

The present disclosure also provides a storage medium for storing instructions. When the instructions are running on the communication device 6100, the communication device 6100 is caused to implement any one of the above methods. Optionally, the storage medium is an electronic storage medium. Optionally, the storage medium is a computer-readable storage medium, but it is not limited to this, and it may also be a storage medium readable by other devices. Optionally, the storage medium may be a non-transitory storage medium, but it is not limited to this, and it may also be a transitory storage medium.

The present disclosure also provides a program product. When the program product is executed by the communication device 6100, the communication device 6100 is caused to implement any one of the above methods. Optionally, the program product is a computer program product.

The present disclosure also provides a computer program. When the computer program is running on a computer, the computer is caused to implement any one of the above methods.

**INDUSTRIAL** UTILITY

In the method of the present disclosure, the terminal sends the first information to the network device to report capabilities supporting different measurements, so that the network device may learn terminal capabilities, which facilitates the terminal to perform parallel measurements when supporting a corresponding capability, thus improving measurement efficiency.

**Claims**

1. A communication method, comprising:
   sending, by a terminal, first information to a network device, wherein the first information indicates a terminal capability of the terminal for simultaneously performing different measurements.

2. The method of claim 1, wherein the terminal capability comprises at least one of:

   a first capability for performing parallel measurements simultaneously according to a network controlled small gap (NCSG) and a concurrent measurement gap (MG);
   a second capability for performing parallel measurements simultaneously according to a measurement occasion for which a needforgap (NFG) is that no MG is needed and a concurrent MG;
   a third capability for supporting a plurality of sets of NCSG configurations and not supporting performing parallel measurements according to an NCSG; or
   a fourth capability for supporting a plurality of sets of NCSG configurations, and performing parallel measurements according to an NCSG.

3. The method of claim 2, further comprising:
   in a case that the terminal supports the third capability, determining, by the terminal, a scaling factor $K_p$ of a layer 3 (L3) measurement according to a time-domain conflict between a plurality of sets of NCSGs and a measurement occasion for which no MG is needed.

4. The method of claim 3, wherein $K_p$ satisfies:

$$K_p = N_{total} / N_{available},$$

   wherein $N_{total}$ represents a total number of synchronization signal/physical broadcast channel block (SSB) measurement timing configuration (SMTC) occasions within a first window, and $N_{available}$ represents a number of SMTC occasions within the first window that do not overlap with any non-dropped measurement occasion or a measurement length (ML) of the NCSG.

5. The method of claim 4, wherein
   $N_{total}$ comprises SMTC occasions within the first window that overlap with a measurement occasion or SMTC occasions within the first window that overlap with the ML of the NCSG.

6. The method of claim 4, wherein

   the first window is a maximum value between a period of the SMTC occasions and a maximum measurement gap repetition period (MGRP_max), and the MGRP_max is a maximum value among MGRPs of configured first part MGs and visible interruption repetition periods (VIRPs) of configured first part NCSGs, wherein MGs and NCSGs are per-user equipment (UE) configurations, the first part MGs comprise all configured MGs, and the first part NCSGs comprise all configured NCSGs; or wherein MGs and NCSGs are per-frequency range (FR) configurations, the first part MGs comprise an MG corresponding to an FR that is the same as an SSB frequency, and the first part NCSGs comprise an NCSG corresponding to the FR that is the same as the SSB frequency, wherein a starting time of the first window is a starting time of any SMTC occasion.

7. The method of claim 4, wherein

$K_p$ is 1 in a case that $N_{available}$ is 0.

8. The method of claim 2, wherein
in a case that the terminal supports the first capability, the second capability or the fourth capability, a carrier-specific scaling factor (CSSF) of a layer 3 (L3) measurement is applicable to a first measurement object (MO) associated with the NCSG.

9. The method of claim 8, wherein the first MO comprises at least one of:

an SSB-based intra-frequency MO requiring the NCSG to perform measurement; or
an inter-system MO requiring the NCSG to complete measurement.

10. The method of claim 2, wherein
in a case that the terminal supports the third capability, a carrier-specific scaling factor (CSSF) of a layer 3 (L3) measurement is applicable to a second measurement object (MO) associated with the NCSG.

11. The method of claim 10, wherein the second MO comprises at least one of:

an SSB-based intra-frequency MO requiring no MG, wherein all SMTC occasions of the SSB-based intra-frequency MO overlap with the NCSG;
an SSB-based intra-frequency MO requiring the NCSG;
an SSB-based intra-frequency MO, wherein all or some of SMTC occasions of the SSB-based intra-frequency MO overlap with the NCSG;
an SSB-based inter-frequency MO requiring no MG, wherein all SMTC occasions of the SSB-based inter-frequency MO overlap with the NCSG;
an SSB-based inter-frequency MO requiring the NCSG; or
an inter-system MO requiring the NCSG.

12. The method of claim 10, wherein
the terminal measures the second MO according to the NCSG.

13. The method of claim 10, wherein
each set of NCSGs in a plurality of sets of NCSGs has a corresponding CSSF.

14. The method of claim 2, further comprising:
in a case that the terminal supports the third capability, determining, by the terminal, a parameter P of layer 1 (L1) measurement according to a time-domain conflict between a plurality of sets of NCSGs and a measurement occasion for which no MG is needed.

15. The method of claim 14, wherein P satisfies:

in a frequency range 1 (FR1), P $= N_{total}' / N_{outside\_MG}$; or
in an FR2 and $N_{available}' = 0$, P = sharing factor * $N_{total}' / N_{outside\_MG}$, or in the FR2 and $N_{available}' > 0$, P $= N_{total}' / N_{available}'$,
wherein $N_{total}'$ represents a total number of reference signal resource occasions within a second window; $N_{outside\_MG}$ represents a number of reference signal resource occasions within the second window that do not overlap with an MG or a number of reference signal resource occasions within the second window that do not overlap with a measurement length (ML) of the NCSG; $N_{available}'$ represents a number of reference signal resource occasions within the second window that do not overlap with any of the MG, an SMTC occasion, or the ML of the NCSG; and the sharing factor represents a constant determined according to a protocol.

16. The method of claim 15, wherein
$N_{total}'$ comprises one of: a reference signal resource occasion within the second window that overlaps with an MG, a reference signal resource occasion that overlaps with the SMTC occasion, or a reference signal resource occasion that overlaps with the ML of the NCSG.

17. The method of claim 15, wherein

the second window is a maximum value between a period of a reference signal and a maximum measurement gap repetition period (MGRP_max), wherein the MGRP_max is a maximum value among MGRPs of configured first part MGs and visible interruption repetition periods (VIRPs) of configured first part NCSGs, wherein MGs and NCSGs are per-user equipment (UE) configurations, the first part MGs comprise all configured MGs, and the first part NCSGs comprise all configured NCSGs; or
wherein MGs and NCSGs are per-frequency range (FR) configurations, the first part MGs comprise an MG corresponding to an FR that is the same as a reference signal frequency, and the first part NCSGs comprise an NCSG corresponding to the FR that is the same as the reference signal frequency,
wherein a starting time of the second window is a starting time of any reference signal resource occasion.

18. A communication method, comprising:
receiving, by a network device, first information sent by a terminal, wherein the first information indicates a terminal capability of the terminal for simultaneously performing different measurements.

19. The method of claim 18, wherein the terminal capability comprises at least one of:

a first capability for performing parallel measurements simultaneously according to a network controlled small gap (NCSG) and a concurrent measurement gap (MG);
a second capability for performing parallel measurements simultaneously according to a measurement occasion for which a needforgap (NFG) is that no MG is needed and a concurrent MG;
a third capability for supporting a plurality of sets of NCSG configurations and not supporting performing parallel measurements according to an NCSG; or
a fourth capability for supporting a plurality of sets of NCSG configurations, and performing parallel measurements according to an NCSG.

20. The method of claim 19, wherein a scaling factor $K_p$ of a layer 3 (L3) measurement satisfies:

$$K_p = N_{total} / N_{available},$$

wherein $N_{total}$ represents a total number of synchronization signal/physical broadcast channel block (SSB) measurement timing configuration (SMTC) occasions within a first window, and $N_{available}$ represents a number of SMTC occasions within the first window that do not overlap with any non-dropped measurement occasion or a measurement length (ML) of the NCSG.

21. The method of claim 20, wherein $N_{total}$ comprises SMTC occasions within the first window that overlap with a measurement occasion or SMTC occasions within the first window that overlap with the ML of the NCSG.

22. The method of claim 20, wherein

the first window is a maximum value between a period of the SMTC occasions and a maximum measurement gap repetition period (MGRP_max), and the MGRP_max is a maximum value among MGRPs of configured first part MGs and visible interruption repetition periods (VIRPs) of configured first part NCSGs, wherein MGs and NCSGs are per-user equipment (UE) configurations, the first part MGs comprise all configured MGs, and the first part NCSGs comprise all configured NCSGs; or

wherein MGs and NCSGs are per-frequency range (FR) configurations, the first part MGs comprise an MG corresponding to an FR that is the same as an SSB frequency, and the first part NCSGs comprise an NCSG corresponding to the FR that is the same as the SSB frequency, wherein a starting time of the first window is a starting time of any SMTC occasion.

23. The method of claim 20, wherein $K_p$ is 1 in a case that $N_{available}$ is 0.

24. The method of claim 19, wherein in a case that the terminal supports the first capability, the second capability or the fourth capability, a carrier-specific scaling factor (CSSF) of a layer 3 (L3) measurement is applicable to a first measurement object (MO) associated with the NCSG.

25. The method of claim 24, wherein the first MO comprises at least one of:

an SSB-based intra-frequency MO requiring the NCSG to perform measurement; or
an inter-system MO requiring the NCSG to complete measurement.

26. The method of claim 19, wherein in a case that the terminal supports the third capability, a carrier-specific scaling factor (CSSF) of a layer 3 (L3) measurement is applicable to a second measurement object (MO) associated with the NCSG.

27. The method of claim 26, wherein the second MO comprises at least one of:

an SSB-based intra-frequency MO requiring no MG, wherein all SMTC occasions of the SSB-based intra-frequency MO overlap with the NCSG;
an SSB-based intra-frequency MO requiring the NCSG;
an SSB-based intra-frequency MO, wherein all or some of SMTC occasions of the SSB-based intra-frequency MO overlap with the NCSG;
an SSB-based inter-frequency MO requiring no MG, wherein all SMTC occasions of the SSB-based inter-frequency MO overlap with the NCSG;
an SSB-based inter-frequency MO requiring the NCSG; or
an inter-system MO requiring the NCSG.

28. The method of claim 26, wherein each set of NCSGs in a plurality of sets of NCSGs has a corresponding CSSF.

**29.** The method of claim 19, wherein a parameter P of layer 1 (L1) measurement satisfies:

in a frequency range 1 (FR1), $P = N_{total}' / N_{outside\_MG}$; or

in an FR2 and $N_{available}' = 0$, $P$ = sharing factor * $N_{total}' / N_{outside\_MG}$, or in the FR2 and $N_{available}' > 0$, $P = N_{total}' / N_{available}'$,

wherein $N_{total}'$ represents a total number of reference signal resource occasions within a second window; $N_{outside\_MG}$ represents a number of reference signal resource occasions within the second window that do not overlap with an MG or a number of reference signal resource occasions within the second window that do not overlap with a measurement length (ML) of the NCSG; $N_{available}'$ represents a number of reference signal resource occasions within the second window that do not overlap with any of the MG, an SMTC occasion, or the ML of the NCSG; and the sharing factor represents a constant determined according to a protocol.

**30.** The method of claim 29, wherein $N_{total}'$ comprises one of: a reference signal resource occasion within the second window that overlaps with an MG, a reference signal resource occasion that overlaps with the SMTC occasion, or a reference signal resource occasion that overlaps with the ML of the NCSG.

**31.** The method of claim 29, wherein

the second window is a maximum value between a period of a reference signal and a maximum measurement gap repetition period (MGRP_max), wherein the MGRP_max is a maximum value among MGRPs of configured first part MGs and visible interruption repetition periods (VIRPs) of configured first part NCSGs, wherein MGs and NCSGs are per-user equipment (UE) configurations, the first part MGs comprise all configured MGs, and the first part NCSGs comprise all configured NCSGs; or

wherein MGs and NCSGs are per-frequency range (FR) configurations, the first part MGs comprise an MG corresponding to an FR that is the same as a reference signal frequency, and the first part NCSGs comprise an NCSG corresponding to the FR that is the same as the reference signal frequency,

wherein a starting time of the second window is a starting time of any reference signal resource occasion.

**32.** A terminal, comprising:

a transceiver module, configured to send first information to a network device, wherein the first information indicates a terminal capability of the terminal for simultaneously performing different measurements.

**33.** A network device, comprising:

a transceiver module, configured to receive first information sent by a terminal, wherein the first information indicates a terminal capability of the terminal for simultaneously performing different measurements.

**34.** A terminal, comprising:

one or more processors,
where the terminal is configured to implement the method of any one of claims 1 to 17.

**35.** A network device, comprising:

one or more processors,
where the network device is configured to implement the method of any one of claims 18 to 31.

**36.** A communication system, comprising a terminal and a network device, wherein the terminal is configured to implement the method of any one of claims 1 to 17, and the network device is configured to implement the method of any one of claims 18 to 31.

**37.** A storage medium for storing instructions that, when executed by a communication device, cause the communication device to implement the method of any one of claims 1 to 17, or the method of any one of claims 18 to 31.

communication system 100

terminal 101 —— network device 102

FIG. 1

terminal 101

network device 102

S2101, sending first information →

S2102, determining a measurement parameter according to a capability

S2103, performing a corresponding measurement according to the measurement parameter

FIG. 2a

MG

MGL ⟵MGRP⟶

VIL1→ ML ←VIL2

NCSG

⟵VIRP⟶

FIG. 2b

| sending first information | S3101 |

| determining a measurement parameter according to a capability | S3102 |

| performing a corresponding measurement according to the measurement parameter | S3103 |

FIG. 3a

| sending first information to the network device | S3201 |

**FIG. 3b**

| sending first information to the network device | S3301 |

| determining a scaling factor Kp of an L3 measurement according to a time-domain conflict between a plurality of sets of NCSGs and a measurement occasion for which no MG is needed | S3302 |

**FIG. 3c**

| sending first information to the network device | S3401 |

| determining a parameter P of an L1 measurement according to a time-domain conflict between a plurality of sets of NCSGs and a measurement occasion for which no MG is needed | S3402 |

**FIG. 3d**

| obtaining first information | S4101 |

**FIG. 4a**

| receiving first information sent by the terminal | S4201 |

**FIG. 4b**

5101

| transceiver module | processing module |

5102

**FIG. 5a**

5201

| transceiver module | processing module |

5202

**FIG. 5b**

6100

FIG. 6a

6200

FIG. 6b

## INTERNATIONAL SEARCH REPORT

| International application No. |
| --- |
| **PCT/CN2023/107025** |

### A. CLASSIFICATION OF SUBJECT MATTER

H04W 8/24(2009.01)i

According to International Patent Classification (IPC) or to both national classification and IPC

### B. FIELDS SEARCHED

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

3GPP, CNTXT, ENTXT, ENTXTC, WPABS, DWPI: 终端, 测量, 能力, 同时, 间隔, 扩展, 缩放, 系数, 因子, 参数; UE, capability, ability, measure, measurement, simultaneous, same, time, NCSG, MG, MO, SMTC, SSB

### C. DOCUMENTS CONSIDERED TO BE RELEVANT

| Category* | Citation of document, with indication, where appropriate, of the relevant passages | Relevant to claim No. |
| --- | --- | --- |
| X | WO 2023060468 A1 (GUANGDONG OPPO MOBILE TELECOMMUNICATIONS CORP., LTD.) 20 April 2023 (2023-04-20) <br> description, page 3, line 24 to page 30, line 30 | 1-2, 18-19, 32-37 |
| Y | WO 2023060468 A1 (GUANGDONG OPPO MOBILE TELECOMMUNICATIONS CORP., LTD.) 20 April 2023 (2023-04-20) <br> description, page 3, line 24 to page 30, line 30 | 3-17, 20-31 |
| Y | WO 2022032599 A1 (GUANGDONG OPPO MOBILE TELECOMMUNICATIONS CORP., LTD.) 17 February 2022 (2022-02-17) <br> description, page 4, line 1 to page 12, line 8 | 3-17, 20-31 |
| A | CN 110062392 A (HUAWEI TECHNOLOGIES CO., LTD.) 26 July 2019 (2019-07-26) <br> entire document | 1-37 |
| A | CN 115250514 A (CHINA MOBILE COMMUNICATION CO., LTD., RESEARCH INSTITUTE et al.) 28 October 2022 (2022-10-28) <br> entire document | 1-37 |

☑ Further documents are listed in the continuation of Box C.　　☑ See patent family annex.

| | |
| --- | --- |
| \* Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **12 March 2024** | **20 March 2024** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| | International application No. |
|---|---|
| | **PCT/CN2023/107025** |

**C.    DOCUMENTS CONSIDERED TO BE RELEVANT**

| Category* | Citation of document, with indication, where appropriate, of the relevant passages | Relevant to claim No. |
|---|---|---|
| A | HUAWEI et al. "Discussion on NCSG"<br>*3GPP TSG-RAN WG4 Meeting #99-e R4-2110913*, 27 May 2021 (2021-05-27),<br>entire document | 1-37 |

## INTERNATIONAL SEARCH REPORT
### Information on patent family members

International application No.

**PCT/CN2023/107025**

| Patent document cited in search report | | | Publication date (day/month/year) | Patent family member(s) | | | Publication date (day/month/year) |
|---|---|---|---|---|---|---|---|
| WO | 2023060468 | A1 | 20 April 2023 | None | | | |
| WO | 2022032599 | A1 | 17 February 2022 | CN | 115669145 | A | 31 January 2023 |
| CN | 110062392 | A | 26 July 2019 | WO | 2019141231 | A1 | 25 July 2019 |
| CN | 115250514 | A | 28 October 2022 | WO | 2022228050 | A1 | 03 November 2022 |

Form PCT/ISA/210 (patent family annex) (July 2022)